# EUROPÄISCHE PATENTSCHRIFT

(11) **EP 1 464 883 B1**
(45) Veröffentlichungstag und Bekanntmachung des Hinweises auf die Patenterteilung: **09.08.2006**
(21) Anmeldenummer: 04006032.9
(22) Anmeldetag: 13.03.2004
(51) Int. Cl.: F16L 37/22, F16L 37/23, F16L 37/42

(54) **Entlüftungskupplung ohne zusätzliche Fangmittel**
Quick coupling connector with venting position without additional retaining means
Raccord rapide à eventage sans moyens de retenue additionnels

(30) Priorität: 03.04.2003 DE 10315340
(43) Veröffentlichungstag der Anmeldung: 06.10.2004
(73) Patentinhaber: TEMA Marketing AG, 6300 Zug (CH)
(72) Erfinder: Seifert, Jürgen, 71665 Ensingen (DE)
(74) Vertreter: Rüger, Barthelt & Abel Patentanwälte

(56) Entgegenhaltungen:
- WO-A-99/19657
- US-A- 5 290 009
- US-A- 5 445 358
- US-A- 5 806 564

## Beschreibung

Eine Entlüftungskupplung besteht, wie die EP 1 006 308 A1 zeigt, aus einem Grundkörper mit einem durchgehenden, im Wesentlichen rotationssymmetrischen Kanal. In dem Kanal befindet sich ein Ventilsitz, der mit einem ebenfalls in dem Kanal enthaltenen Ventilverschlussglied zusammenwirkt. Das Ventilverschlussglied wird geöffnet, wenn vom vorderen Ende her ein Stecker in den Kanal des Grundkörpers der Entlüftungskupplung eingeschoben wird.

Um den Stecker in dem Kanal zu halten, weist der Stecker eine umlaufende Ringnut auf, die im eingesteckten Zustand von zwei Verriegelungsstiften gefasst wird. Die beiden Verriegelungsstifte liegen parallel zueinander auf beiden Seiten der Längsachse des Kanals in entsprechenden schräg verlaufenden Schlitzen. Durch die Einsteckbewegung des Steckers werden die Verriegelungsstifte durch den Stecker nach hinten gedrängt, wobei sie durch die Form der Schlitze gleichzeitig auch radial auch voneinander weg bewegt werden.

Mittels einer Schraubenfeder werden die Verriegelungsstifte, die endseitig über den Grundkörper überstehen, in die Verriegelungsstellung vorgespannt.

Zum Lösen des Steckers sitzt auf dem Grundkörper eine Betätigungshülse, die in ihrem Inneren eine plane Ringschulter trägt, die an den überstehenden Enden der Stifte anliegt. Wenn der Benutzer die Betätigungshülse in Richtung auf das hintere Ende des Grundkörpers bewegt, werden hierdurch die Verriegelungsstifte mitgenommen und geben die Haltenut in dem Stecker frei.

Damit der Stecker durch den herrschenden Innendruck nicht herausgeschossen wird, sind zusätzlich noch zwei Fangkugeln vorhanden. Jede von ihnen sitzt in einem zugehörigen Langloch, das sich in Richtung parallel zur Längsachse des Grundkörpers erstreckt. Durch Steuerflächen in der Betätigungshülse wird dafür gesorgt, dass beim Entriegeln der Verriegelungsstifte die Fangkugeln in die Haltenut des Steckers gedrückt werden. Der sich heraus bewegende Stecker nimmt die Fangkugeln in den Langlöchern mit, bis diese an dem vorderen Ende der Langlöcher anstoßen und eine weitere Bewegung des Steckers blockieren.

Um den Stecker vollständig entnehmen zu können, ist eine erneute Bewegung der Betätigungshülse nach vorne in Richtung auf den Stecker nötig, um die Freigabe der Fangkugeln zu ermöglichen.

Aufgrund des Aufbaus weist die Betätigungshülse üblicherweise am vorderen Ende eine größere Ringfläche auf als am hinteren Ende. Die Konsequenz ist, dass das beim Entriegeln des Steckers in die Betätigungshülse einströmende Gas bestrebt ist, die Betätigungshülse nach vorne in Richtung der Freigabe der Fangkugeln zu bewegen. Wenn dieser Fall eintritt, schießt der Stecker mit hoher Geschwindigkeit aus der Kupplung heraus, so als wären keine Fangkugeln vorhanden.

Beim Stand der Technik sind deswegen komplizierte Entlüftungsöffnungen vorgesehen, die eine vorzeitige Bewegung der Betätigungshülse aufgrund des Gasdrucks verhindern sollen.

Eine andere Lösung bei der bekannten Entlüftungskupplung besteht in der Verwendung eines federvorgespannten Anschlags für die Betätigungshülse, wobei die Vorspannung des Sitzes durch den Gasdruck erhöht wird, um so ein Festhalten der Betätigungshülse zu gewährleisten.

Nachteilig bei all diesen Arten von Kupplungshülsen ist die Verwendung zusätzlicher Fangkugeln. Die Steuerflächen zum Führen der Fangkugeln müssen sehr genau auf die Ringschulter zum Betätigen der Verriegelungsstifte abgestimmt sein. Es muss unbedingt dafür gesorgt werden, dass der Stecker aus den Verriegelungsstiften erst frei kommt, wenn die Fangkugeln hinreichend radial nach innen gezwungen sind, um die Fangwirkung entfalten zu können.

Andererseits dürfen die Fangkugeln nicht das Einstecken des Steckers in den Grundkörper behindern. Dies erfordert eine Bewegungsüberschneidung zwischen den Verriegelungsstiften und den Fangkugeln, was hinsichtlich der Tolerierung durchaus kritisch ist.

Darüber hinaus neigen die Fangkugeln dazu, die Haltenut in dem Stecker allmählich zu beschädigen. Bei jedem Auslösen der Kupplung bewegt sich, wie oben erwähnt, der Stecker zusammen mit den Fangkugeln zum vorderen Ende der Langlöcher, wo die Fangkugeln abrupt angehalten werden. Die dabei auftretenden Kräfte zweiter Ordnung sind erheblich und neigen dazu, Dellen in die entsprechende Flanke der Haltenut des Steckers zu hämmern. Außerdem beschädigen sie das vordere Ende der Langlöcher, dass auf diese Weise langsam verlagert wird.

Bei der zuvor erwähnten Überschneidung bei der Bewegung der Fangkugeln radial nach innen und der Bewegung der Verriegelungsstifte durch die Betätigungshülse lässt es sich auch nicht vermeiden, dass der Stecker die Übergangsfläche längs derer sich die Fangkugeln innerhalb der Betätigungshülse bewegen allmählich beschädigen und verformen, womit die exakte Synchronisierung der Bewegung nicht mehr gewährleistet ist.

Eine Anordnung, die diese Nachteile vermeidet, ist aus der WO 99/19657 bekannt. Das dort beschriebene Buchsenteil einer Entlüftungskupplung für Fluidverbindungen mit Stecker weist einen Grundkörper auf, durch den ein Kanal hindurchführt. In dem Kanal sitz längs verschieblich eine Zwischenhülse, die ihrerseits an ihrem vorderen Ende dazu eingerichtet ist, einen eingesteckten Stecker aufzunehmen.

Um die Zwischenhülse in dem Kanal des Grundkörpers in der gekuppelten Stellung zu verriegeln, sind in dem Buchsenköper Radialbohrungen enthalten, in denen Haltekugeln sitzen. Die Kugeln wirken mit einer Umfangsnut in der Zwischenhülse zusammen.

Zur Steuerung der Lage der Kugeln sitzt auf dem Grundkörper eine erste oder äußere Betätigungshülse mit einer entsprechen Steuernut.

Die Zwischenhülse ist ebenfalls mit Radialbohrungen versehen, in denen Fangkugeln angeordnet sind. Die radiale Lage der Fangkugeln wird durch eine zweite oder innere Betätigungshülse gesteuert, die auf der Zwischenhülse verschieblich ist und in einem Ringspalt sitzt, den die Zwischenhülse mit der ersten Betätigungshülse bildet.

Beim Zusammenstecken in der Kupplungsstellung rastet zunächst der Stecker in der Zwischenhülse ein. Hierdurch kann die innere Betätigungshülse für diese Fangkugeln in eine axial vordere Stellung gelangen. Sodann wird mit dem Stecker die Zwischenhülse in ihre Raststellung gebracht, in der gleichzeitig auch das in dem Buchsenteil enthaltene Ventil geöffnet wird.

Zum Entnehmen des Steckers wird zunächst die radial äußere Betätigungshülse zurückgeschoben, wodurch die Zwischenhülse freigegeben wird und in die vorgeschobene Stellung gleiten kann. Der Stecker bleibt dabei in der Zwischenhülse gefangen. Um den Stecker zu entnehmen wird die zweite, radial Innen liegende kleinere Betätigungshülse, zurückgezogen, damit die in der Zwischenhülse enthaltenen Fangkugeln radial nach außen ausweichen können, um den Stecker frei zu geben.

Das bekannte Buchsenteil für eine Fluidkupplung erfordert die sequentielle Betätigung von zwei Betätigungshülsen zur Entnahme des Steckers, wobei insbesondere die radial innen liegende Betätigungshülse verhältnismäßig klein und schlecht zu greifen ist.

Ausgehend hiervon ist es Aufgabe der Erfindung, einen Buchsenteil für eine Fluidkupplung zu schaffen, bei der keine zusätzlichen Fangmittel erforderlich sind, um den Stecker nach dem Entriegeln in der Entlüftungsstellung festzuhalten und die mit einer einzigen Betätigungshülse auskommt.

Diese Aufgabe wird erfindungsgemäß mit dem Buchsenteil mit den Merkmalen des Anspruches 1 gelöst.

Bei dem erfindungsgemäßen Buchsenteil enthält der Grundkörper eine Zwischenhülse, die den Stecker aufnimmt. In der Zwischenhülse sitzen beweglich die Steckerhaltekörper, die den Stecker sowohl in der gekuppelten als auch in der Entlüftungsstellung in dem Buchsenteil festsetzen. Hierdurch sind zusätzlich Fangmittel, wie sie beim Stand der Technik benötigt werden, entbehrlich. Die Steckerhaltekörper, beispielsweise in Gestalt der Verriegelungsstifte, bleiben immer mit der Steckernut im Eingriff. Zum Entlüften bewegt sich die Zwischenhülse zusammen mit dem darin verriegelten Stecker in die Entlüftungsstellung. Eine komplizierte Abstimmung der Bewegung zwischen Fangmitteln und Verriegelungsstiften ist somit entbehrlich. Selbst nach langem Einsatz mit einer Vielzahl von Kupplungs- und Entkupplungsvorgängen treten keinerlei Probleme auf, um den Stecker sicher in der Verriegelungsstellung zu halten.

Darüber hinaus hat die Anordnung den wesentlichen Vorteil, dass der Gasdruck, der sich beim Entkuppeln in die Betätigungshülse ausbreitet, keine Bewegung der Betätigungshülse im Sinne eines völligen Freigebens des Steckers bewirken kann. Die Bewegung zum Freigeben des Steckers aus der Entlüftestellung ist vielmehr entgegengesetzt zu jener Bewegungsrichtung, in die der Gasdruck die Betätigungshülse bewegen möchte.

In Verbindung mit dem erläuterten Ausführungsbeispiel wird dies nachstehend ausführlich beschrieben.

Aufgrund der Anordnung bewegen sich die Zwischenhülse und der Stecker gemeinsam in die Entlüftestellung. Da hierzu aber Verriegelungsstifte verwendet werden können, die am Grund der Haltenut des Steckers angreifen, ist eine Beschädigung der äußeren Nutkante am Stecker ausgeschlossen, wie sie hingegen bei der Verwendung von Fangkugeln auftritt.

Die Kinematik bei dem neuen Buchsenteil führt zu einem Freigeben der Verriegelung in Richtung auf die Entlüftungsstellung, indem die Betätigungshülse nach vorne in Richtung auf den Stecker bewegt wird. Diese Kinematik hat einen weiteren Vorteil: Sie verhindert ein versehentliches Öffnen der Stecker-Buchse-Verbindung, wenn das Buchsenteil mit eingestecktem Stecker über den Boden gezogen wird und sich mit der Betätigungshülse hinter einem Gegenstand verhakt. Bei den üblichen Kupplungen würde die Betätigungshülse im Sinne eines Freigebens des Steckers bewegt werden. Der Stecker käme zumindest in die Entlüftungsstellung bzw. könnten vollständig herausgeschossen werden, weil die Betätigung der Betätigungshülse in einem solchen Falle schlagartig und nicht gedämpft von Hand erfolgt. Der in der Betätigungshülse auftretende Gasdruck könnte die Betätigungshülse im Sinne einer Freigabe der Fangstellung bewegen.

Bei dem erfindungsgemäßen Buchsenteil besteht die Gefahr nicht, denn eine über den Boden geschleppte Kupplung, die sich mit der Betätigungshülse hinter einem festen Gegenstand verhakt, kann die Betätigungshülse nicht im Sinne eines Lösens der Kupplung zwischen Buchsenteil und Stecker bewegen.

Das erfindungsgemäße Buchsenteil hat somit gegenüber den bekannten Lösungen eine Reihe von erheblichen technischen Vorteilen.

Die Montage ist wesentlich vereinfacht, wenn der Grundkörper zweiteilig ist und sich aus einem vorderen und einem hinteren Abschnitt zusammensetzt. Diese beiden Abschnitte können formschlüssig miteinander verbunden sein, vorzugsweise durch ein Gewinde, womit eine Reparatur denkbar ist. Eine formschlüssige Verbindung durch Bördeln oder Einprägen von Ringswulsten wäre ebenfalls denkbar.

Im Grundkörper kann ein Ventilsitz enthalten sein, der vorzugsweise an einem Ring ausgebildet ist. Die Drehteile werden dadurch verhältnismäßig einfach, denn es werden komplizierte Hinterdrehungen vermieden. Außerdem vereinfacht sich das Fügen bzw. die Montage, da das Ventilverschlussglied durch den Sitz durchgeschoben werden kann, während das hintere Teil des Grundkörpers noch nicht angebracht ist.

Die Sitznut für den O-Ring des Verschlussgliedes ist frei von außen zugänglich und wird erst unzugänglich, wenn der hintere Abschnitt des Grundkörpers auf den vorderen aufgeschraubt ist. Gleichzeitig kann der Ring für den Ventilsitz auch noch eine Ringnut enthalten, die eine Dichtung aufnimmt, in der ein O-Ring sitzt, der die Zwischenhülse in der gekuppelten Stellung nach außen hin abdichtet.

Der Bewegungshub der Zwischenhülse lässt sich ohne weiteres festlegen, indem der vordere Abschnitt des Grundkörpers eine radial nach innen vorspringende Schulter aufweist, die mit einer radial nach außen kragenden Schulter in der Zwischenhülse zusammenwirkt.

Eine besonders gute Verriegelung der Zwischenhülse in der gekuppelten Stellung lässt sich erreichen, wenn der Grundkörper mehrere Öffnungen für mehrere Hülsenhaltekörper enthält. Jeder Hülsenhaltekörper übernimmt nur einen Teil der Last, womit die Punktbelastung zwischen Hülsenhaltekörper und Zwischenhülse im Bereich der Haltenut vermindert ist.

Letztes ist insbesondere von Vorteil, wenn die Hülsenhaltekörper kugelförmig ausgebildet sind.

Die Zwischenhülse ist an ihrem in dem Grundkörper befindlichen Ende mit einer Dichtfläche versehen, die mit einer Dichtfläche am Grundkörper zusammenwirkt. Auf diese Weise beschränkt sich die Abdichtung auf dem vollständig gekuppelten Zustand, während ansonsten keine Abdichtung zwischen der Zwischenhülse und dem Grundkörper erfolgt, so dass die Luft oder ein anderes Gas frei abströmen kann, wenn der Stecker entkuppelt werden soll.

Zweckmäßigerweise befindet sich die Nut für den O-Ring in dem Ring der auch den Ventilsitz bildet.

In ihrem nach vorne aus dem Grundkörper herausragenden Abschnitt enthält die Zwischenhülse eine oder zwei seitliche Öffnungen, für eine entsprechende Anzahl von Steckerhaltekörpern. Die Steckerhaltekörper können vorzugsweise von Stiften gebildet sein, was den Vorteil hat, dass sie am Stecker nicht an der Kante von den dessen Haltenut sondern in Nutengrund wirksam sind.

Um eine hinreichende Abdichtung zu gewährleisten, enthält die Zwischenhülse eine Dichtung die, mit dem Stecker zusammenwirkt.

Die Herstellung der Anordnung vereinfacht sich, wenn die Zwischenhülse und der Grundkörper und/oder auch die Betätigungshülse abgesehen von evtl. radialen Öffnungen rotationssymmetrisch sind.

Die seitliche Öffnung für den oder die Steckerhaltekörper sind zweckmäßigerweise schräg verlaufenden Schlitze. Sie haben die Eigenschaft, den Steckerhaltekörper fest in die Haltenut des Steckers einzudrücken, wenn der Stecker durch den Gasdruck im Sinne eines Herausdrängens aus dem Grundkörper belastet wird.

Das Vorspannmittel für den Steckerhaltekörper umfasst zweckmäßigerweise eine Scheibe, die mit Hilfe einer Feder so vorgespannt ist, dass sie den Steckerhaltekörper in die Verriegelungsstellung drängt.

Die Zahl der Bauteile lässt sich bei der neuen Kupplung dadurch vermindern, dass die Vorspannmittel für den Steckerhaltekörper und die Vorspanneinrichtung für die Betätigungshülse von einer gemeinsamen Schraubenfeder gebildet sind. Dies wird durch die entgegengesetzte Bewegung zum Entriegeln und Freigeben möglich.

Die Betätigungshülse ist aus Gründen der einfacheren Montage vorzugsweise aus einem vorderen und einem hinteren Abschnitt zusammengesetzt. Die beiden Abschnitte sind stoffschlüssig und/oder formschlüssig, vorzugsweise durch ein Schraubgewinde miteinander verbunden.

Die Steuerfläche in der Betätigungshülse ist zweckmäßiger eine plane Ringschulter, die mit den seitlich überstehenden Enden der Verriegelungsstifte zusammenwirkt.

Das Steuerglied für den oder die Hülsenhaltekörper ist von einem Ring gebildet, der auf dem Grundkörper sitzt und entsprechende Steuerflächen trägt. Im Falle einer lediglich axial verschieblichen Betätigungshülse umfassen die Steuerflächen zwei Zylinderflächen mit unterschiedlichem Durchmesser, die über eine kegelstumpfförmige Fläche miteinander verbunden sind.

Damit auch im nicht gekuppelten Zustand, die Betätigungshülse fest in einer definierten Lage steht, wird sie durch die Vorspanneinrichtung in jene Endstellung vorgespannt, in der sie den Hülsenhaltekörper in Richtung auf eine in den Kanal vorragende Stellung vorspannt.

Damit das Ventilverschlussglied mit Sicherheit geschlossen ist, bzw. geringe Gasverluste beim Entkuppeln auftreten, ist das Ventilverschlussglied zweckmäßigerweise durch eine Druckfeder in Richtung auf die Schließstellung vorgespannt.

Bei dem neuen Buchsenteil befindet sich diese Druckfeder vorzugsweise außerhalb jenes Strömungsweges, den das Fluid nimmt, wenn es im gekuppelten Zustand durch den Buchsenteil hindurchströmt.

Dies kann erreicht werden, wenn sich die Druckfeder auf jener Seite des Ventilsitzes befindet, die dem eingesteckten Stecker benachbart ist.

Wenn die Zwischenhülse selbst gegen den Grundkörper abgedichtet ist, addiert sich deren hydraulisch wirksame Ringfläche zu der Fläche des Steckers.

Die Kraft die beim Einführen des Steckers überwunden werden muss, ist folglich gleich dem Produkt aus dem in dem Buchsenteil herrschenden Druck multipliziert mit der Summe der beiden Flächen. Diese Einsteckkraft für den Stecker lässt sich verringern, wenn die Ringfläche der Zwischenhülse nicht mehr mit Druckluft beaufschlagt wird. Hierzu darf die Zwischenhülse nicht gegenüber dem Buchsenkörper abgedichtet sein. Um dennoch dichte Verhältnisse zu erzeugen, ist in der Zwischenhülse eine zweite Dichtungsanordnung vorgesehen, die zwischen dem Ventilverschlussglied und der Zwischenhülse wirksam ist. Dadurch ist auf der stromabseits gelegenen Seite des Ventilverschlussgliedes eine fluiddichte Abdichtung gegenüber der Zwischenhülse erreicht.

Um eine möglichst schnelles Entlüften zu erreichen, ist es darüber hinaus zweckmäßig, wenn zwischen dem Ventilverschlussglied und dem Grundkörper eine weitere Dichtungsanordnung vorgesehen ist, die den Innenraum des Kanals lediglich dann abdichtet, wenn sich das Ventilverschlussglied in der Offenstellung des Ventils befindet.

Im übrigen sind Weiterbildungen Gegenstand von Unteransprüchen. Dabei sollen auch solche Merkmalskombinationen als beansprucht angesehen werden, auf die kein ausdrückliches Ausführungsbeispiel gerichtet ist. Außerdem sind für den Fachmann auch ohne weiteres eine Reihe von Modifikationen denkbar, die, um den Umfang des Ausführungsbeispiels nicht zu sprengen, nicht weiter erläutert sind.

In der Zeichnung ist ein Ausführungsbeispiel des Gegenstandes der Erfindung dargestellt. Es zeigen:
- Fig. 1: das erfindungsgemäße Buchsenteil in einer perspektivischen, in Längsrichtung aufgeschnittenen Darstellung,
- Fig. 2: das Buchsenteil nach Figur 1, in Verbindung mit einem Stecker, in einer Stellung vor dem Einführen des Steckers,
- Fig. 3: das Buchsenteil in einer Darstellung nach Figur 1, mit eingestecktem verriegeltem Stecker, in der Entlüftungsstellung der Zwischenhülse,
- Fig. 4: den Buchsenteil nach Fig. 2 mit eingestecktem Stecker, in der Kupplungsstellung der Zwischenhülse,
- Fig. 5: den Buchsenteil nach Fig. 2 mit einer Stellung der Betätigungshülse im Sinne des Entriegelns der Zwischenhülse,
- Fig. 6: den Buchsenteil in einer Darstellung entsprechend Fig. 2 mit der Betätigungshülse in einer Stellung zum Freigeben des Steckers aus der Zwischenhülse,
- Fig. 7: ein weiteres Ausführungsbeispiel für den erfindungsgemäßen Buchsenteil, in einer Betriebsstellung mit Stecker in der Fangstellung und in einem Längschnitt, und
- Fig.8: Den Buchsenteil nach Fig. 8, in einer Stellung mit vollständig eingeschobenen Stecker bei geöffneten Ventil.

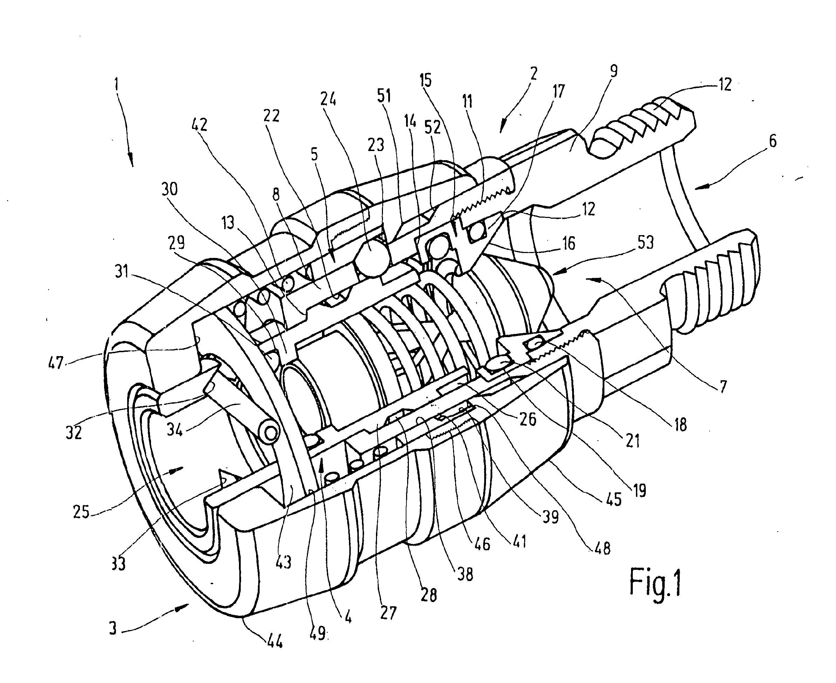

Figur 1 zeigt in einer perspektivischen geschnittenen Darstellung einen Buchsenteil 1 einer Entlüftungskupplung. Aus Übersichtlichkeitsgründen sind die Schnittflächen in der Figur nicht schraffiert.

Zu dem Buchsenteil 1 gehört als wesentliche Hauptbestandteile ein Grundkörper 2, auf dem längsverschieblich eine Betätigungshülse 3 geführt ist. Innerhalb des Grundkörpers 2 befindet sich eine Zwischenhülse 4 sowie ein Steuerring 5 auf dem Grundkörper 2. Durch den Grundkörper2 führt ein Kanal 6 hindurch, in dem ein Ventil 7 angeordnet ist.

Der Grundkörper 2 setzt sich aus einem vorderen etwa rohrförmigen und einem hinteren ebenfalls etwa rohrförmigen Abschnitt 8 und 9 zusammen, die bei 11 über in Innen-/Außengewinde miteinander verschraubt sind. Der hinter Abschnitt 9 endet an einem Anschlussgewinde 12, an dem der Buchsenteil 1 an eine Schlauchleitung oder eine Rohrleitung, die zu einer Druckquelle führt, anschraubbar ist.

An seinem vorderen, innerhalb des vorderen Abschnittes 9 liegenden Ende ist der hintere Abschnitt 9 mit einer Ausdrehung versehen, die an einer planen Ringschulter 12 endet. Der hintere Abschnitt 9 ist rotationssymmetrisch.

Der vordere Abschnitt 8 ist auf den hinteren Abschnitt 9 aufgeschraubt und an seinem vorderen Ende mit einer radial nach innen vorspringenden Schulter 13 versehen. Am hinteren Ende des vorderen Abschnittes 8 ist ebenfalls eine Ausdrehung vorgesehen, die an einer Ringschulter 14 endet. Zwischen der Ringschulter 14 und der Ringschulter 12 ist ein Ventilsitzring 15 eingefügt.

Der Ventilsitzring 15 endet an einer kegelstumpfförmigen Dichtfläche 16. An seiner Außenumfangsfläche enthält er eine Nut 17, in der ein O-Ring 18 liegt, der gegen die Innenseite des hinteren Abschnitts 9 abdichtet. Eine weitere Ringnut 19, die radial nach innen zu offen ist, enthält einen O-Ring 21, der als Dichtung für die Zwischenhülse 4 dient.
Der vordere Abschnitt 8 enthält zwischen der Ringschulter 13 und der Ringschulter 14 eine zylindrische glatte Innenfläche 22 mit konstantem Durchmesser. Der Durchmesser der Innenfläche 22 ist etwas größer als der Durchmesser des Sitzringes 15 im Bereich der Nut 19. Die lichte Weite des Ventilsitzrings 15 ist im Bereich der Nut 19 genauso groß wie die Öffnung, die die Ringschulter 13 lässt. Die kegelstumpfförmige Ventilfläche 16 springt hiergegen radial nach innen vor, wie dies Figur 1 erkennen lässt.

In dem Bereich zwischen dem Ventilsitzring 15 und der Ringschulter 13 enthält der vordere Abschnitt insgesamt 6 längs dem Umfang verteilte Bohrungen 23, in denen Kugeln 24 sitzen, die als Hülsenhaltekörper dienen. Der Durchmesser der Kugeln 24 ist größer, als die Wandstärke des vorderen Abschnitts 8 im Bereich der Bohrungen 23. Auf diese Weise stehen die Kugeln 24 entweder über die zylindrische Innenseite 22 oder über die ebenfalls zylindrische Außenseite des vorderen Abschnittes 8 über.

Abgesehen von den Bohrungen 23 ist der vordere Abschnitt 8 ein rotationssymmetrischer Körper mit derselben Symmetrieachse wie der hintere Abschnitt 9.

Innerhalb des vorderen Abschnittes 8 ist die bereits erwähnte Zwischenhülse 4 axial verschieblich geführt. Die Zwischenhülse 4 weist einen Durchlass 25 auf, der in seinem vorderen Bereich, wie später noch beschreiben, als Aufnahmeraum für einen Stecker dient. An der kreisförmigen Außenseite der Zwischenhülse 8 ist im hinteren Bereich eine Zylinderfläche 26 ausgebildet, die als Dichtfläche dient und mit dem O-Ring 21 zusammenwirkt. Im Anschluss an die Dichtfläche 26 ist die Zwischenhülse 4 mit einem Bund 27 versehen, der radial nach außen vorspringt und an beiden Enden an planen Ringschultern endet. Etwa im mittleren Bereich des Bunds 27 ist eine Nut 28 enthalten, die etwa trapezförmigen Querschnitt hat und mit den Kugeln 24 zusammenwirkt.

Die Lage des Bunds 27 sowie der Rastnut 28 ergibt aus der weiter unten gegebenen Funktionsbeschreibung.

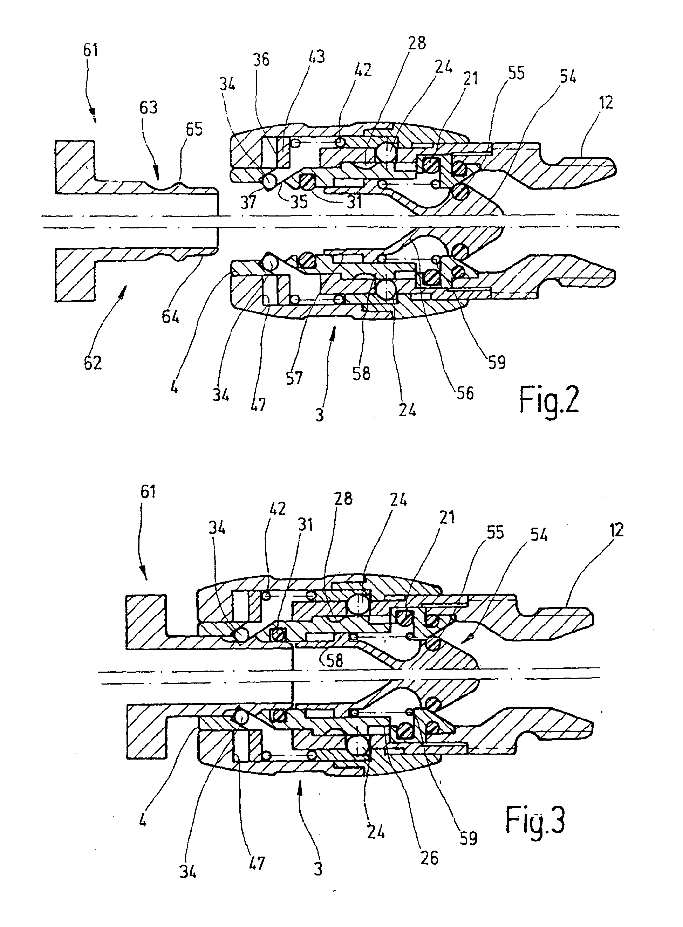

In einem durch die Steckergeometrie vorgegebenen Abstand von der vorderen Stirnseite der Zwischenhülse 4 enthält diese in ihrem Durchlass 25 eine Ringnut 29 in einem Bund 30. In der Ringnut 29 liegt ein O-Ring 31, der gegen den Stecker abdichtet. Zwischen dem Bund 30 und dem vorderen freien Ende sind in der Zwischenhülse 4 zwei zueinander symmetrische Schlitze 32 und 33 vorgesehen, in denen Zylinderstifte 34 aufgenommen sind, die über die zylindrische Außenumfangsfläche der Zwischenhülse 4 überstehen. Die Schlitze 32 und 33 sind, wie Figur 2 erkennen lässt, jeweils von zwei zueinander parallelen Wänden 35 und 36 begrenzt und enden stumpf an einer Bodenfläche 37, die rechtwinklig zu den beiden Seitenwänden 35 und 36 liegt. Der Abstand der Wände 35 und 36 entspricht dem Durchmesser des zugehörigen Zylinderstifts 34. Die Richtung der Schlitze 32, 33, definiert durch den Verlauf ihrer beiden Seitenwände 35 und 36, ist so gewählt, dass Mittelebenen zwischen den beiden Wänden 35 und 36 die Rotationsachse der Zwischenhülse 4 im Bereich des vorderen Endes der Zwischenhülse 4 schneiden.

Der bereits erwähnte Steuerring 5 gleitet auf der zylindrischen Außenumfangsfläche des vorderen Abschnittes 8 im Bereich der Bohrungen 23. Er weist zwei Zylinderflächen 38, 39 auf, die über eine kegelstumpfförmige Fläche 41 miteinander verbunden sind. Der Durchmesser der Fläche 38 ist so gewählt, dass der Steuerring 5 hiermit auf der Außenseite des vorderen Abschnittes 8 aufliegt, während der Durchmesser 39 so gewählt ist, dass die Kugeln 24 nicht in das Lichtraumprofil des vorderen Abschnittes 8 nach innen vorstehen, wenn sie an der Fläche 39 anliegen.

Eine Schraubendruckfeder 42 spannt den Steuerring 5 in Richtung auf das hintere Ende des Buchsenteils 1 vor. Die Schraubendruckfeder 42 stützt sich nach vorne zu, an einer planen Scheibe 43 ab, die auf der zylindrischen Außenseite der Zwischenhülse 4 angeordnet ist. Die Scheibe 43 befindet sich zwischen den beiden Zylinderstiften 34 und dem Stirnende des vorderen Abschnitts des Grundkörpers. Die Scheibe 43 liegt an den vier über die Außenumfangsfläche der Zwischenhülse 4 überstehenden Enden der insgesamt zwei Zylinderstifte 34 an.

Zum Auslösen der Verriegelung ist die Betätigungshülse 3 vorgesehen. Die Betätigungshülse 3 ist Rotationssymmetrisch und besteht aus einem vorderen Abschnitt 44, der mit einem hinteren Abschnitt 45 bei 46 miteinander verschraubt ist. Im Inneren der Betätigungshülse 3 befindet sich ein im Wesentlicher zylindrischer Raum, der nach vorne durch eine Ringschulter 47 nach hinten durch eine Ringschulter 48 und radial nach außen durch eine Zylinderfläche 49 begrenzt ist.

In dem so definierten Raum befindet sich die Scheibe 43, die Druckfeder 42 sowie der Steuerring 5. Außerhalb des hierdurch begrenzten Raums ist die Betätigungshülse 3 so bemessen, dass sei im vorderen Bereich auf der Zwischenhülse 4 und im hinteren Bereich jenseits der Haltekugeln 24 auf dem vorderen Abschnitt 8 des Grundkörpers 2 frei gleiten kann. Sie ist obendrein auf den genannten Bauteilen frei drehbar.

Die Betätigungshülse 3 enthält in ihrem hinteren Ende eine Ausdrehung die an einer Schulter 51 endet, die nach hinten zeigt. Schulter 51 wirkt mit einer Schulter 52 zusammen, die auf dem vorderen Abschnitt 8 des Grundkörpers 2 ausgebildet ist.

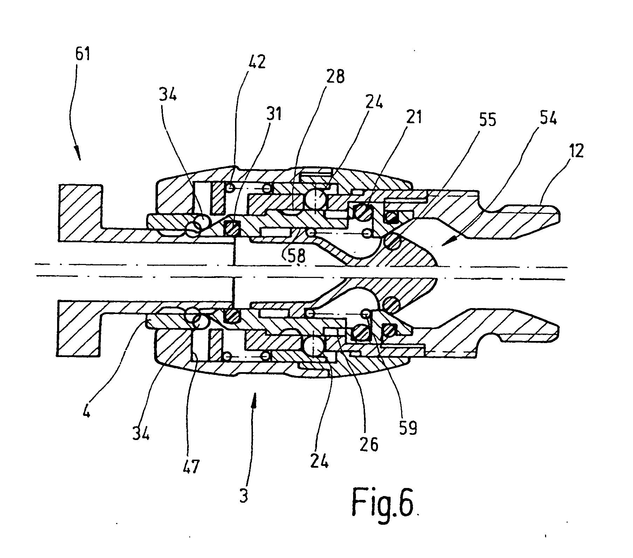

Das im Inneren des Kanals befindlich Ventil 7 setzt aus dem bereits erwähnten Ventilsitzring 15 sowie einem Ventilverschlussglied 53 zusammen. Das Ventilverschlussglied 53 besteht aus einem im Wesentlichen kegelförmigen Abschnitt 54, wie dies der Schnitt von Figur 5 erkennen lässt. In dem Bereich mit größerem Durchmesser befindet sich eine Nut, in der ein O-Ring 55 angeordnet ist. Der Außendurchmesser des kegelförmigen Abschnitts 54 ist so gewählt, dass er gerade eben durch den Ventilsitzring 15 hindurch passt, wenn kein O-Ring 55 aufgezogen ist. Die Kegelspitze des kegelförmigen Abschnittes 54 zeigt in Richtung auf das hintere Ende des Grundkörpers 2.

An seiner nach vorne gelegenen Fläche geht der kegelförmige Abschnitt 54 in einen V-förmig gegabelten Steg 56 über, der den hinteren kegelförmigen Abschnitt 54 mit einem vorderen rohförmigen Abschnitt 57 verbindet. Der rohrförmige Abschnitt 57 trägt einen Bund 58, an den sich eine Druckfeder 59 abstützt, deren anderes Ende neben der Nut 19 an dem Ventilsitzring 15 anliegt.

Wie die Figur unschwer erkennen lässt, liegt bei dem erfindungsgemäßen Buchsenteil 1 die Druckfeder 59, die das Ventilverschlussglied 54 in die Schließstellung vorspannt außerhalb der Fluidströmung. Die komprimierte Druckfeder 59 wirkt somit nicht als Strömungshindernis, wie dies der Fall wäre, wenn die Druckfeder 59 in einer aus dem Stand der Technik bekannten Weise eingebaut wäre.

Aus der nachfolgenden Montagebeschreibung ergeben sich implizite Dimensionierungsvorschriften, die bei der zuvor gegebenen Erläuterung der einzelnen Bauteile nicht erwähnt wurden.

Im Rahmen der Montage wird zunächst das Ventil 7 vormontiert. Hierzu wird der Ventilsitzring 15 mit den beiden O-Ringen 18 und 21 bestückt. Anschließend wird die Druckfeder 59 über das Ventilverschlussglied 53 gestreift, bis sie an dem Bund 58 anliegt. Sodann wird das Ventilsverschlussglied 53 durch die Bohrung in dem Sitzring 15 hindurch gesteckt, bis der kegelförmige Abschnitt 54 jenseits der Konusfläche 16 auftaucht. Nun wird der O-Ring 55 eingesetzt, womit der kegelstumpfförmige Abschnitt 54 im Bereich des O-Rings 55 größer wird als die lichte Weite des Sitzrings 15. Die Druckfeder 59 zieht den O-Ring 55 gegen die Dichtfläche 16.

Das so vormontierte Ventil 7, wird vom rückwärtigen Ende her in die Zwischenhülse 4 eingeführt. Dabei wird der rohrförmige Abschnitt 57 einerseits mit Hilfe des Bunds 58 in dem zylindrischen Abschnitt des Durchlasses 25 im Bereich zwischen dem O-Ring 29 und dem hinteren Ende der Zwischenhülse 4 geführt. Der nach vorne zeigende Teil des rohrförmigen Abschnitts 57 wird in der Öffnung geführt, die der Bund 30 begrenzt. Der Durchmesser dieser Öffnung entspricht dem Durchmesser eines Steckers an seinem vordersten Ende.

Das so erhaltene Gebilde wird von der Rückseite her, in den vorderen Abschnitt 8 des Grundkörpers eingesteckt. Abschließend wird vom hinteren Ende her der hintere Abschnitt 9 in den vorderen Abschnitt 8 eingeschraubt, wobei der Sitzring 15 zwischen der Schulter 14 und dem vorderen Ende des hinteren Abschnitts 9 festgeklemmt wird.

Nachdem der Grundkörper 2 in dieser Weise vormontiert ist, wird der hintere Abschnitt 45 der Betätigungshülse 3 aufgeschoben und es werden die Kugeln 24 in die Bohrungen 23 eingefüllt. Sodann wird der Steuerring 5 aufgesteckt, wobei die Zylinderfläche mit dem größeren Durchmesser dem hinteren Ende des Grundkörpers 2 zugekehrt ist.

Anschließend werden die Druckfeder 42 und die Scheibe 43 aufgesteckt. Die Druckfeder 42 wird komprimiert, um die beiden Zylinderstifte 34 in die zugehörigen Schlitze 32 und 33 einsetzen zu können. Abschließend wird der vordere Abschnitt 44 der Betätigungshülse 3 mit dem hinteren Abschnitt 45 verschraubt, womit die Montage abgeschlossen ist.

Anhand der Figuren 2 bis 6 wird nunmehr die Funktionsweise des Buchsenteils 1 in Verbindung mit einem Stecker 61 erläutert.

Der Stecker 61 endet vorne an einem rohrförmigen Abschnitt 62, der eine trapezförmige Haltenut 63 enthält. Zum vorderen Ende schließt sich an die Haltenut 63 ein verjüngter Abschnitt 64 an, dessen Außendurchmesser etwa genauso groß ist, wie der Durchmesser innerhalb der Nut 63. Es entsteht hierdurch eine Rippe 65, die in einer noch zu beschreibenden Weise als Halterippe dient. Der Außendurchmesser der Rippe 65 bzw. des gesamten Abschnittes 62 entspricht dem Durchmesser des zylindrischen Durchlasses 25, bis zu dem Bund 30. Der Durchmesser des Abschnitts 64 hingegen ist etwas größer als die lichte Weite im Bereich des O-Rings 31 und kleiner als der Bund 30, der die Nut 29 für den O-Ring 31 enthält. Im übrigen entspricht der Durchmesser des Abschnitts 64 dem Außendurchmesser des rohrförmigen Abschnittes 54.

Zunächst sei angenommen, dass sich der Stecker 61 außerhalb des Buchsenteils 1 befindet. In dem Buchsenteil 1 ist das Ventil 7 geschlossen, d.h. der O-Ring 55 wird durch die Kraft der Druckfeder 59 sowie durch den Gasdruck gegen die Dichtfläche 16 angedrückt. Die Betätigungshülse 3 steht im vorderen Bereich.

Sie wird dort von der Feder 42 gehalten. Die Feder 42 stützt sich an der Scheibe 43 ab und drückt gegen den Steuerring 5, der wiederum an der Schulter 48 anliegt und die Betätigungshülse 3 gegen die Zylinderstifte 34 andrückt. Die Bewegung des Steuerrings 5 nach hinten wird begrenzt, wenn die Konusfläche 41 gegen den nach außen radial vorstehenden Bereich der Kugeln 24 anliegt.

Wenn in dieser Stellung nun der Stecker 61 eingedrückt wird, passiert die umlaufende Rippe 65 die beiden Zylinderstifte 34 und drückt sie hierbei radial nach außen. Diese radial nach auswärts gerichtete Bewegung ist wegen der schräg verlaufenden Schlitze 32, 33 von einer Bewegung entgegen der Kraft der Druckfeder 42 begleitet. Die Scheibe 43 weicht entsprecht nach hinten aus, damit die Rippe 65 passieren kann. Unmittelbar nachdem die Rippe 65 an den beiden Zylinderstiften 34 vorbeigelangt ist, rasten diese in die Nut 63 ein. Der Abschnitt 64 des Steckers 61 dichtet gegen den O-Ring 31 in den radial nach innen springenden Bund 30. Die Rippe 65 liegt mit ihrer voreilenden Flanke, wie Figur 3 erkennen lässt, an dem Bund 30 an.

Die Druckfeder 42 drückt über die Scheibe 43 die beiden Zylinderstifte 34 in den Schlitz 32 und 33 nach vorne und somit in die radial engste Stellung, in der sie gleichzeitig am Grund der Nut 63 anliegen.

Das Ventil 7 ist zunächst nach wie vor geschlossen. Gleichzeitig ist der Stecker 61 in der Zwischenhülse 4 fest verankert und kann nicht nach außen herausgezogen werden. Die Kugeln 24 liegen wie in der Stellung nach Figur 2 radial auf der Außenseite des Bunds 27 auf.

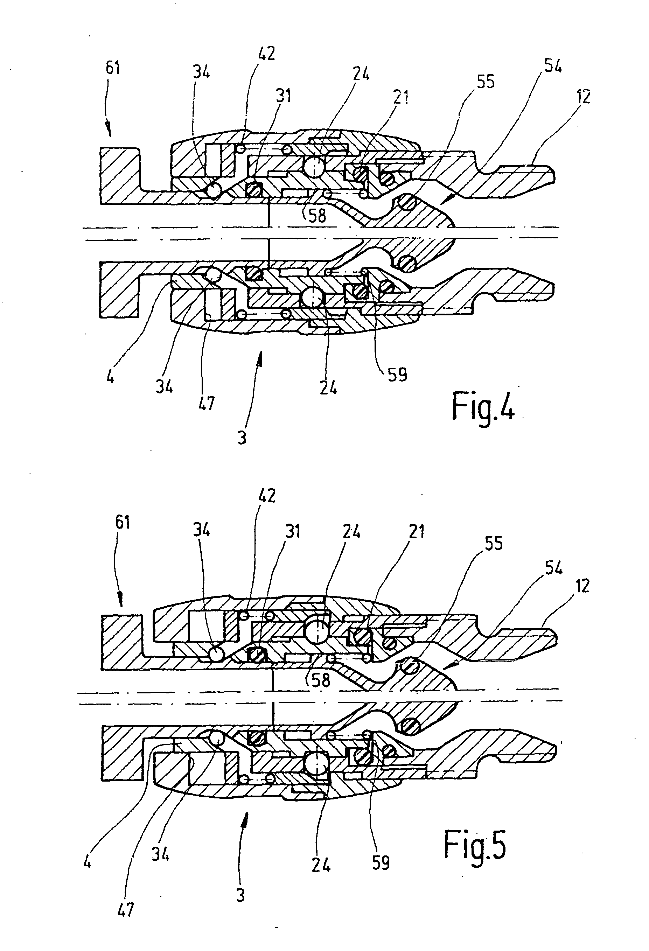

Im nächsten Schritt wird jetzt der Stecker 61 noch tiefer eingeschoben. Hierbei nimmt die Rippe 65, die an dem Bund 30 der Zwischenhülse 4 anliegt, die Zwischenhülse 4 mit. Sie bewegt sich in Richtung auf den hinteren Abschnitt 9 des Grundkörpers 2. Im Verlauf der Schiebebewegung stößt das vordere Ende des Steckers 61 gegen den rohrförmigen Abschnitt 57 des Ventilverschlussgliedes 53 und schiebt das Ventilverschlussglied 53 bezogen auf Figur 4 nach rechts, d.h. in die Offenstellung, in der der O-Ring 55 von dem Ventilsitz 16 abhebt. Gleichzeitig kommt die trapezförmige Nut 28 in den Bereich der Kugeln 24. Die schräge konusförmige Steuerfläche 41 drängt, die Kugeln 24 radial nach Innen in die Rastnut 28 hinein.

Beim Einschieben des Steckers 61 in die Stellung nach Figur 4 drückt die Zwischenhülse 4 gegen die Scheibe 43, so dass die Druckfeder 42 zunächst stärker komprimiert wird. Gleichzeitig kann nun wegen des Zurückweichens der Scheibe 43 auch die Betätigungshülse 3 zum hinteren Ende des Buchsenteils 1 gleiten, so dass der Steuerring 5, wie beschrieben über die Kugeln 24 gleiten kann.

Der Hub des Steuerrings 5 findet sein Ende, wenn an der hinteren Schulter 48 der Betätigungshülse 3 anliegt. Die Betätigungshülse 3 ist wiederum festgesetzt, indem sie mit ihrer vorderen Schulterfläche 47 an den Zylinderstiften 34 anliegt. Sie wird durch die Wirkung der Feder 42 gegen diese Zylinderstifte 34 hingezogen.

Wenn sich der Steuerring 5 in der Position nach Figur 4 befindet, steht seine Steuerfläche 38 gegenüber den Kugeln 24 und hält sie in einer radial nach innen vorspringen Stellung, in der sie in der Nut 28 liegen.

Die Zwischenhülse 4 kann, bezogen auf Figur 4 nicht mehr nach links verschoben werden. Die gekuppelte Stellung ist fixiert.

Wenn die Zwischenhülse 4 vollständig eingeschoben ist, dichtet sie mit ihrer Zylinderfläche 26 gegen den O-Ring 21 ab. Es besteht jetzt eine nach außen hin abgedichtete Fluidverbindung von dem Stecker 61 durch den rohrförmigen Abschnitt 57 des Ventilverschlussgliedes 53 und durch den Spalt zwischen dem Ventilsitz 16 und dem O-Ring 55 zu dem dahinter befindlichen Teil des Kanals 6. Die Fluidverbindung führt, wie unschwer zu erkennen ist, nicht durch die Schraubenfeder 59 hindurch, sondern verläuft in dem von der Schraubenfeder 59 definierten Innenraum. Die komprimierte Schraubenfeder 59 wirkt somit nicht als Drosselstelle.

Aufgrund des V-förmig gegabelten Stegs 56, der in der Perspektive auch in Figur 1 zu erkennen ist, wird ein weiter Strömungsquerschnitt aufrecht erhalten.

Zum Entriegeln des Steckers 61 in die Entlüftungsstellung wird zunächst die Betätigungshülse 3 gegen die Wirkung der Druckfeder 42 nach vorne in Richtung auf den Stecker 61 geschoben. Dabei verschiebt die Betätigungshülse 3 über die Schulterfläche 48 den Steuerring 5 nach vorne, bis er mit seiner Steuerfläche 39 den Kugeln 24 gegenübersteht. Diese können nunmehr radial nach außen ausweichen. In diese Richtung werden sie durch die schräge Wand der Rastnut 28 gedrückt, da die Zwischenhülse 4 sowohl unter der Spannung der Feder 59 als auch unter dem hydraulischen Druck des Gases liegt.

Da die Kugeln 24 nunmehr radial nach außen ausweichen können, werden sie aufgrund der o.g. Kräfte, die auf der Zwischenhülse 4 lasten, von der Zwischenhülse 4 radial nach außen gedrängt. Die Zwischenhülse 4 bewegt sich zusammen mit dem Stecker 61 bezogen auf Figur 5 nach links. Während der Bewegung bleibt der Stecker 61 nach wie vor starr in der Zwischenhülse 4 verrastet. Die Zylinderstifte 34 werden mit Hilfe der Scheibe 43 und der Druckfeder 42 mit Kraft in Richtung auf das vordere Ende der Schlitze 32 und 33 und somit radial gegen den Stecker 61 gedrückt. Die Zwischenhülse 4 wird sich deswegen zusammen mit dem Stecker 61 nach links bewegen. Dieser Bewegung nach links folgt das Ventilverschlussglied 53 sowohl aufgrund des Gasdrucks als auch aufgrund der Wirkung der Feder 59.

Die nach links gerichtete Bewegung der Zwischenhülse 4 findet ihr Ende, wenn der Bund 27 mit seiner vorderen Schulter gegen die Schulter 13 zur Anlage kommt. In dieser Position ist das Ventil 4 geschlossen und das vordere Ende des Steckers befindet sich in einem geringen Abstand zu dem vorderen Ende des rohrförmigen Abschnittes 57, wie dies in Figur 3 gezeigt ist.

Am Ende der Bewegung wird somit wieder die Position nach Figur 3 erreicht. Der an den Stecker 61 angeschlossene Gasraum kann sich nunmehr durch das Buchsenteil hindurch entlüften, denn auch die gasdichte Verbindung zwischen der Zwischenhülse 4 und dem O-Ring 21 ist aufgehoben. Die Spalte der innerhalb der gegeneinander beweglichen Teile sorgen für einen allmählichen Druckabbau.

Zum vollständigen Entriegeln wird nach dem Druckabbau die Betätigungshülse 3 erneut bewegt und zwar nach hinten, bezogen auf den Buchstenteil 1. Durch diese Bewegung werden die Zylinderstifte 34 wie Figur 6 zeigt, nach hinten und wegen der schrägen Ausrichtung der Schlitze 32 und 33 radial nach außen bewegt, so dass Platz geschaffen wird, damit die Rippe 65 passieren kann.

Wie sich aus der Funktionsbeschreibung ergibt, sind nur die Zylinderstifte 34 vorhanden, um den Stecker 61 sowohl in der vollständig gekuppelten als auch in der Entlüftungsstellung festzuhalten. Sie liegen am Grund der Nut 63 an und beschädigen nicht die empfindlicheren Kanten an der Rippe 65. Die Bewegung der Betätigungshülse 3, die zum Lösen des Steckers 61 aus der Entlüftungsstellung erforderlich ist, ist nach hinten gerichtet. Sie ist einer Bewegungsrichtung entgegen gerichtet, in der das abströmende Gas bestrebt wäre die Betätigungshülse 3 zu bewegen. Da die Schulterfläche 47 größer ist als die Schulterfläche 48 entsteht eine Kraftdifferenz, die nach vorne gerichtet ist. Selbst wenn sich aufgrund des abströmenden Gases die Betätigungshülse 3 nach vorne bewegen sollte, entsteht hierdurch nicht die Gefahr, des Freikommens des Steckers 61, wie beim Stand der Technik. Eine solche Bewegung der Betätigungshülse würde nur dazu führen, die Vorspannkraft der Feder 42 zu erhöhen und in der Folge die Zylinderstifte 34 noch fester gegen den Stecker 61 anzudrücken. Aufgrund der Flächenverhältnisse kann auf keinen Fall eine Bewegung der Betätigungshülse 3 nach hinten erzeugt werden, selbst dann, wenn der Gasfluss innerhalb der Betätigungshülse 3 ungünstig wäre.

Ferner muss die Betätigungshülse 3 nach vorne in Richtung auf den Stecker gezogen werden, damit der Stecker 61 in die Entlüftungsstellung gelangt. Wird das Buchsenteil 1 mit eingestecktem Stecker 61 über den Boden geschleppt und die Betätigungshülse 3 verhakt sich, so würde auf sie eine Kraft wirken, die nach hinten gerichtet ist. Eine solche Kraft könnten nicht eine Bewegung der Betätigungshülse 3 im Sinne des Lösens des Steckers bewirken, weil in diesem Zustand die in dem hinteren Abschnitt 45 enthaltenen Schulter 51 gegen die Schulter 52 anstößt, die an der Außenseite des vorderen Abschnitts 8 des Grundkörpers 2 vorhanden ist und die Zylinderfläche nach hinten begrenzt. Eine solche nach rückwärts gerichtete Bewegung, die dort ihren Anschlag findet, ist erst wieder möglich, wenn die Zwischenhülse 4, sich in der Entlüftungsstellung befindet, d.h. in der vorderen Stellung.

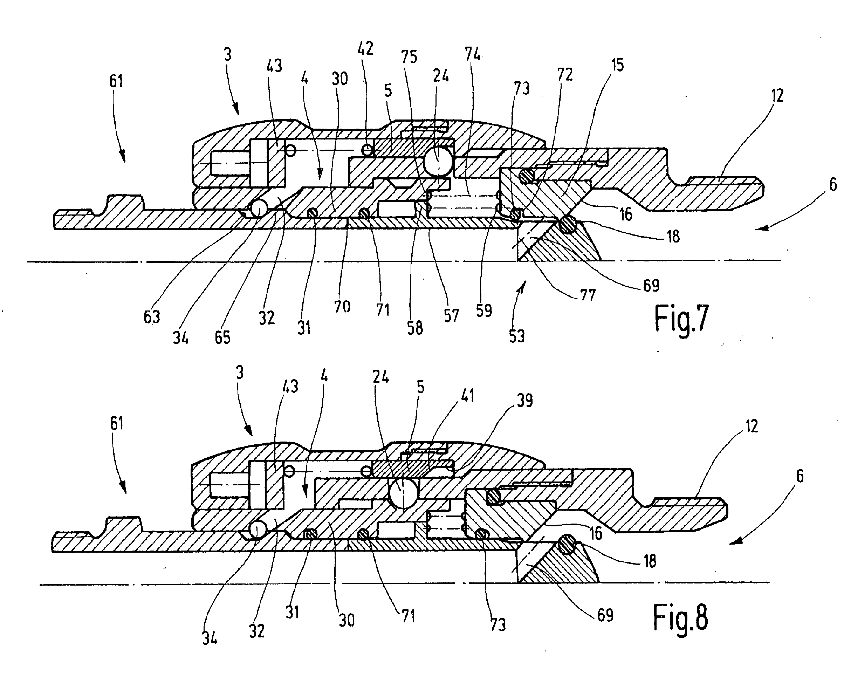

In den Fig. 7 und 8 ist in jeweils einem Längsschnitt ähnlich den Längsschnitten der Fig. 2 und 3 ein weiteres Ausführungsbeispiel des erfindungsgemäßen Buchsenteils 1 gezeigt. Dieses weitere Ausführungsbeispiel zeichnet sich durch eine verminderte Betätigungskraft beim Einführen des Stecker 61 aus.

Bei dem zuvor erwähnten Ausführungsbeispiel wird bei eingestecktem Stecker die Zwischenhülse 4 mit Hilfe der O-Ringdichtung 21 abgedichtet, um den Innenraum des Kanals 6 nach außen hin fluiddicht zu bekommen. Die beim Einstecken des Steckers 61 wirksame und zum überwindende Kraft ergibt sich somit aus dem Produkt des hydraulischen Drucks auf der Druckseite des Ventils 7 multipliziert mit der Summe der effektiven Flächen des Steckers 61 zuzüglich der effektiven Ringfläche der Zwischenhülse 4. Die effektive Ringfläche wird definiert durch die lichte Weite in der O-Ringdichtung 21 und die lichte Weite der O-Ringdichtung 31, wenn sich der Buchsenteil 1 in der gekuppelten Stellung befindet. Wenn diese Ringfläche in jeder Betriebsstellung drucklos ist, entspricht die Betätigungskraft letztlich nur noch der Steckerfläche.

Das Ausführungsbeispiel nach den erwähnten Fig. 7 und 8 zeigt eine Konstruktion, bei der die Zwischenhülse 4 druckfrei ist. Bei der Erläuterung dieses Ausführungsbeispiels wird lediglich auf die Unterschiede zu dem zuvor erwähnten Ausführungsbeispiel eingegangen. Einander entsprechend bzw. wiederkehrende Bauteile sind mit denselben Bezugszeichen belegt.

Das Ventilverschlussglied ist geringfügig anders gestaltet. Der rohrförmige Abschnitt 57 des Ventilverschlussglieds 53 reicht bis unmittelbar an den kegelförmigen Abschnitt 54 heran. Den strömungsmäßigen Durchlass bilden mehrere schräg verlaufende Bohrungen 69, die unmittelbar neben dem O-Ring 55 beginnen und in den Innenraum des rohrförmigen Abschnittes 57 hineinführen.

Ferner gibt es Änderungen an der Zwischenhülse 4. Zusätzlich zu dem O-Ring 31 ist in dem Bund 30 eine weitere Ringnut 70 enthalten, die zum rückwärtigen Ende (in der Fig. rechtes Ende) des Bunds 30 gelegen ist. In dieser Ringnut 70 befindet sich ein O-Ring 71, der im gekuppelten Zustand auf der Außenumfangsfläche des rohrförmigen Abschnittes 57 des Ventilverschlussglieds 53 abdichtet.

Außerdem befindet sich in der Nähe des kegelstumpfförmigen Ventilsitzes 16 auf der stromabwärts gelegenen Seite in dem Ventilsitzring 15 eine Ringnut 72 mit einem darin sitzenden O-Ring 73. Der O-Ring 73 soll ebenfalls bei geöffnetem Ventil 7 gegen die Außenumfangsfläche des rohrförmigen Abschnitts 57 des Ventilverschlussgliedes 53 abdichten. Bei geschlossenem Ventil 7 hingegen besteht, wie die Fig. zeigt, eine geringfügiger Spalt, der eine Entlüftung des an den Stecker 61 angeschlossenen Verbrauches ermöglicht.

Im weiteren Unterschied zu dem zuvor erwähnten Beispiel, ist zusätzlich zu der Schließfeder 59, die das Ventilverschlussglied 53 in die Schließstellung vorspannt, eine Druckfeder 74 koaxial vorhanden. Die Feder 74 stützt sich einenends an derselben Fläche ab wie die Feder 59. Sie wirkt allerdings nicht gegen den Bund 58 des Ventilverschlussglieds 53, sondern gegen eine koaxial dazu angeordnete Ringschulter 75 an dem rückwärtigen Ende der Zwischenhülse 4.

Die nachfolgende Funktionsbeschreibung beschränkt sich ebenfalls auf den Unterschied beim Einkuppeln des Steckers 61.

Wenn der Stecker 61 ausgehend von der Stellung nach Fig. 2 in die Stellung nach Fig. 7 gebracht wird, die im Grunde genommen der Stellung nach Fig. 3 entspricht, führen hierbei die Zylinderstifte 34 die bereits erläuterte Bewegung aus. An Ende dieser Bewegung sind die Zylinderstifte 34 hinter der Rippe 65 verrastet. Der verjüngte Abschnitt 64 ist gegen den O-Ring 31 abgedichtet. Das Ventilverschlussglied 53 befindet sich in dieser Position noch in der Ruhe- oder Schließstellung, die das Ventilverschlussglied 53 auch einnimmt, wenn kein Stecker 61 eingeschoben ist. In dieser Position dichtet der O-Ring 55 gegen die kegelförmige Dichtfläche 16 ab. Außerdem dichtet der O-Ring 71 gegen die Außenumfangsfläche des rohrförmigen Fortsatzes 57 ab. Der O-Ring 73 hingegen dichtet noch nicht ab.

Die Abdichtung verhindert eine Verjüngung 77 des Außendurchmessers des rohrförmigen Fortsatzes 57. Die Verjüngung 77 befindet sich bei geschlossenem Ventil 7 dem O-Ring 73 gegenüber, wodurch sich der in Fig. 7 erkennbarer Ringspalt ergibt.

Wenn der Stecker 61 nun ausgehend von der Position nach Fig. 7 weiter eingeschoben wird, schiebt er die Zwischenhülse 4 vor sich her. Dabei wird das Ventil 4 geöffnet und gleichzeitig der verjüngte Abschnitt 77 unter dem O-Ring 73 durchgeschoben. Letzterer kann nunmehr an der Außenumfangsfläche des rohrförmigen Abschnittes 57 abdichten.
Der gesamte Raum außerhalb der Zwischenhülse 4 ist druckfrei, so dass die Betätigungskraft, die zum Einschieben des Steckers 61 erforderlich ist, nunmehr gleich dem Produkt aus Fluiddruck multipliziert mit der effektiv wirksamen Fläche des Steckers 61 ist.

Im Übrigen ist die Funktion und Wirkungsweise wie zuvor bei dem anderen Ausführungsbeispiel beschrieben.

Ein Buchsenteil für eine Entlüftungskupplung weist eine in dem Buchsengrundkörper bewegliche Zwischenhülse auf, die den Stecker aufnimmt. In der Zwischenhülse befinden sich die Steckerverriegelungsmittel, so dass der Stecker sowohl in der vollständig gekuppelten als auch in der Entlüftungsstellung in der Zwischenhülse verrastet bleibt.

Dadurch werden zusätzliche Fangmittel entbehrlich, die in der Entlüftungsstellung anstelle der Steckerverriegelungsglieder in die Rastnut des Steckers eingreifen.

## Patentansprüche

1. Buchsenteil (1) einer Entlüftungskupplung für Fluidverbindungen mit Steckern (61), die eine umlaufende Haltenut (63) aufweisen,
mit einem einen durchgehenden, zumindest abschnittsweise geraden Kanal (6) enthaltenden Grundkörper (2), der von einer Außenumfangsfläche begrenzt ist und der ein vorderes sowie ein hinteres Ende aufweist,
mit wenigstens einer seitlichen Öffnung (23) in dem Grundkörper (2), die den Grundkörper (2) durchsetzt und in den Kanal (6) einmündet,
mit wenigstens einem Hülsenhaltekörper (24), der sich in der seitlichen Öffnung (23) des Grundkörpers (2) befindet und zwischen einer Stellung, in der er in den Kanal (6) vorragt, und eine Stellung, in der er nicht in den Kanal (6) vorragt, hin und her bewegbar ist,
mit einem auf dem Grundkörper (2) angeordnetem Steuerglied (5) für den Hülsenhaltekörper (24),
mit einer in dem Kanal (6) angeordneten Zwischenhülse (4), die zwischen zwei Stellungen begrenzt hin und her bewegbar ist und die einen Durchlass (25) enthält, in den der Stecker (61) von vorne her einführbar ist,
mit wenigstens einer Halteausnehmung (28), die an der Außenseite der Zwischenhülse (4) vorgesehen ist und dazu eingerichtet ist mit dem Hülsenhaltekörper (24) zusammen zu wirken,
mit wenigstens einer seitlichen Öffnung (32,33) in der Zwischenhülse (4), die die Zwischenhülse (4) durchsetzt und in den Durchlass (25) einmündet,
mit wenigstens einem Steckerhaltekörper (34), der sich in der seitlichen Öffnung (32,33) der Zwischenhülse (4) befindet und dazu dient, mit der Haltenut (63) des Steckers (61) im Sinne eines Haltens des Steckers (61) in der Zwischenhülse (4) zusammen zu wirken,
mit Vorspannmitteln (42,43), die dazu eingerichtet sind den Steckerhaltekörper (34) in seine in den Durchlass (25) vorragende Stellung vorzuspannen,
mit einer auf dem Grundkörper (2) angeordneten und auf dem Grundkörper (2) begrenzt beweglichen Betätigungshülse (3), die wenigstens eine Steuerfläche (47) für den Steckerhaltekörper (34) aufweist, die eine Schulterfläche (48) enthält, gegen die das in der Betätigungshülse (3) angeordnete Steuerglied (5) federelastisch vorgespannt anliegt, und
mit einem in dem Kanal (6) befindlichem Ventil (7) mit einem Ventilsitz (16) und einem Ventilverschlussglied (53).

2. Buchsenteil nach Anspruch 1, **dadurch gekennzeichnet, dass** der Grundkörper (2) zweiteilig ist und sich aus einem vorderen und einem hinteren Abschnitt (8,9) zusammensetzt.

3. Buchsenteil nach Anspruch 1, **dadurch gekennzeichnet, dass** der vordere und der hintere Abschnitt (8,9) des Grundkörpers (2) miteinander formschlüssig, vorzugsweise durch ein Gewinde (11), miteinander verbunden sind.

4. Buchsenteil nach Anspruch 1, **dadurch gekennzeichnet, dass** der Ventilsitz (16) an einem Ring (15) ausgebildet ist.

5. Buchsenteil nach Anspruch 1, **dadurch gekennzeichnet, dass** der Ring (15) mit dem Ventilsitz (16) in axialer Richtung zwischen einer Schulter (14) des vorderen Abschnitts (8) und einer Schulter (12) des hinteren Abschnitts (9) abgedichtet eingefügt ist.

6. Buchsenteil nach Anspruch 1, **dadurch gekennzeichnet, dass** der vordere Abschnitt (8) eine radial nach innen springende Anschlagschulter (13) aufweist, die mit einer radial nach außen vorstehenden Schulter (27) der Zwischenhülse (4) zusammen wirkt, um die Bewegung der Zwischenhülse (4) aus dem Grundkörper (2) heraus zu begrenzen.

7. Buchsenteil nach Anspruch 1, **dadurch gekennzeichnet, dass** der Grundkörper (2) mehrere seitliche Öffnungen (23) für mehrere Hülsenhaltekörper (24) enthält, die den Grundkörper (2) durchsetzten und in den Kanal (6) einmünden, wobei die Öffnungen (23) in einer gemeinsamen Ebene liegen, die zu der Längsachse des Kanals (6) rechtwinklig ist.

8. Buchsenteil nach Anspruch 1, **dadurch gekennzeichnet, dass** der Hülsenhaltekörper (24) kugelförmig ist.

9. Buchsenteil nach Anspruch 1, **dadurch gekennzeichnet, dass** die Zwischenhülse (4) an ihrem in dem Grundkörper (2) befindlichen Ende mit einer Dichtfläche (26) versehen ist, die mit einer Dichtfläche (21) in dem Grundkörper (2) zusammenwirkt.

10. Buchsenteil nach Anspruch 9, **dadurch gekennzeichnet, dass** die Dichtfläche (21) der Zwischenhülse (4) von einer Zylinderfläche gebildet ist.

11. Buchsenteil nach Anspruch 10, **dadurch gekennzeichnet, dass** die Dichtfläche (21) in dem Grundkörper (2) von einem O-Ring gebildet ist, der in einer Nut (19) angeordnet ist.

12. Buchsenteil nach den Ansprüchen 8 und 11, **dadurch gekennzeichnet, dass** sich die Nut (19) für die Dichtung in dem Grundkörper (2) in dem Ventilsitzring (15) befindet.

13. Buchsenteil nach Anspruch 1, **dadurch gekennzeichnet, dass** der Zwischenhülse (4) eine eigene Vorspanneinrichtung (42) zugeordnet ist, durch die die Zwischenhülse (4) in ihre vordere Stellung vorgespannt ist.

14. Buchsenteil nach Anspruch 1, **dadurch gekennzeichnet, dass** die Zwischenhülse (4) nach vorne aus dem Grundkörper (2) herausragt, und dass sich die seitliche Öffnung (32,33) für den Steckerhaltekörper (34) in dem in allen Bertriebsstellungen über den Grundkörper (2) überstehenden Abschnitt der Zwischenhülse (4) befindet.

15. Buchsenteil nach Anspruch 1, **dadurch gekennzeichnet, dass** die Zwischenhülse (4) eine Dichtung (31) für den Stecker (61) enthält.

16. Buchsenteil nach Anspruch 5, **dadurch gekennzeichnet, dass** die Dichtung (31) von einem O-Ring gebildet ist, der in einer Nut (29) der Zwischenhülse (4) sitzt.

17. Buchsenteil nach Anspruch 1, **dadurch gekennzeichnet, dass** die Halteausnehmung (28) an der Außenseite der Zwischenhülse (4) von einer umlaufenden Ringnut gebildet ist.

18. Buchsenteil nach Anspruch 1, **dadurch gekennzeichnet, dass** der Grundkörper (2), abgesehen von den in dem Grundkörper (2) enthaltenen seitlichen Öffnungen (23), rotationssymmetrisch ist.

19. Buchsenteil nach Anspruch 1, **dadurch gekennzeichnet, dass** die Zwischenhülse (4) in dem Grundkörper (2) frei drehbar und begrenzt längsverschieblich geführt ist.

20. Buchsenteil nach Anspruch 1, **dadurch gekennzeichnet, dass** die Zwischenhülse (4), abgesehen den seitlichen Öffnung (32,33) für den Steckerhaltekörper (34), rotationssymmetrisch ist.

21. Buchsenteil nach Anspruch 1, **dadurch gekennzeichnet, dass** die seitliche Öffnung (32,33) für den Steckerhaltekörper (34) von einem Schlitz gebildet ist, der von zwei zueinander parallelen Wänden (35,36) begrenzt ist, die unter einem spitzen Winkel zu der Längsachse der Zwischenhülse (4) verlaufen, derart, dass sie an der Stelle, an der sie in die Außenumfangsfläche der Zwischenhülse (4) übergehen, dem hinteren Ende des Buchsenteils (1) näher benachbart ist, als jene Stelle an der die Wände (35,36) in den Durchlass (25) der Zwischenhülse (4) einmünden.

22. Buchsenteil nach Anspruch 21, **dadurch gekennzeichnet, dass** der Schlitz (32,33) lediglich ein Stück weit von der Seite her in den Durchlass (25) hineinragt.

23. Buchsenteil nach Anspruch 1, **dadurch gekennzeichnet, dass** der Steckerhaltekörper (34) von einem Zylinderstift gebildet ist, der seitlich über die Außenumfangsfläche der Zwischenhülse (4) übersteht.

24. Buchsenteil nach Anspruch 22, **dadurch gekennzeichnet, dass** die Vorspannmittel (43) eine Scheibe umfassen, die mit den Enden des Zylinderstiftes (34) zusammenwirkt, die seitlich über die Zwischenhülse (4) überstehen.

25. Buchsenteil nach Anspruch 1, **dadurch gekennzeichnet, dass** die Vorspannmittel (42) eine Schraubenfeder umfassen, die sich mittelbar oder unmittelbar an einer Schulterfläche (48) der Betätigungshülse (3) abstützt.

26. Buchsenteil nach Anspruch 1, **dadurch gekennzeichnet, dass** die Vorspannmittel (42) für den Steckerhaltekörper (34) und die Vorspanneinrichtung (42) für die Betätigungshülse (4) von einer gemeinsamen Schraubenfeder gebildet sind.

27. Buchsenteil nach Anspruch 1, **dadurch gekennzeichnet, dass** die Betätigungshülse (3) rotationssymmetrisch ist.

28. Buchsenteil nach Anspruch 1, **dadurch gekennzeichnet, dass** die Betätigungshülse (3) aus einem vorderen und einem hinteren Abschnitt (44,45) besteht.

29. Buchsenteil nach Anspruch 28, **dadurch gekennzeichnet, dass** der vordere und der hintere Abschnitt (44,45) miteinander stoffschlüssig oder formschlüssig, vorzugsweise durch ein Schraubengewinde (46), miteinander verbunden sind.

30. Buchsenteil nach Anspruch 1, **dadurch gekennzeichnet, dass** das Steuerglied (5) für den Hülsenhaltekörper (24) von einem Ring gebildet ist, der auf dem Grundkörper (2) sitzt und Steuerflächen (38,39,41) trägt.

31. Buchsenteil nach Anspruch 30, **dadurch gekennzeichnet, dass** sich die Steuerflächen (38,39,41) für den Hülsenhaltekörper (24) aus zwei Zylinderflächen (38,39) mit unterschiedlichem Durchmesser zusammensetzen, die über eine kegelstumpfförmige Fläche (41) miteinander verbunden sind.

32. Buchsenteil nach Anspruch 1, **dadurch gekennzeichnet, dass** die Betätigungshülse (3) durch eine Vorspanneinrichtung (42) in jene Endstellung vorgespannt ist, in der sie den Hülsenhaltekörper (24) in einer in den Kanal (6) vorragenden Stellung vorspannt.

33. Buchsenteil nach Anspruch 1, **dadurch gekennzeichnet, dass** das Ventilverschlussglied (53) mittel einer Druckfeder (59) in seine Schließstellung vorgespannt ist.

34. Buchsenteil nach Anspruch 33, **dadurch gekennzeichnet, dass** sich die Druckfeder (59) außerhalb des Strömungswegs eines durch den Kanal (6) des Buchsenteils (1) strömenden Fluids befindet.

35. Buchsenteil nach Anspruch 34, **dadurch gekennzeichnet, dass** sich die Druckfeder (59) auf jener Seite des Ventilsitzes (16) befindet, die dem eingesteckten Stecker (61) benachbart ist.

36. Buchsenteil nach Anspruch 1, **dadurch gekennzeichnet, dass** die Zwischenhülse (4) gegen den Grundkörper (2) nicht abgedichtet ist.

37. Buchsenteil nach Anspruch 1, **dadurch gekennzeichnet, dass** zwischen der Zwischenhülse (4) und dem Ventilverschlussglied (53) eine Dichtungsanordnung (71) vorgesehen ist.

38. Buchsenteil nach Anspruch 1, **dadurch gekennzeichnet, dass** zwischen dem Ventilverschlussglied (53) und dem Grundkörper (2) eine Dichtungsanordnung (73) vorgesehen ist, die derart angeordnet ist, dass sie bei geöffnetem Ventil (7) den Innenraum des Kanals (6) nach außen hin abdichtet.

39. Buchsenteil nach Anspruch 1, **dadurch gekennzeichnet, dass** der Betätigungshülse (3) ein Anschlag (51,52) zugeordnet ist, der bei vollständig eingestecktem Stecker (61) mit gasdichter Fluidverbindung eine Bewegung der Betätigungshülse (3) im Sinne eines Wegbewegens des Steckerhaltekörpers (34) von dem Stecker (61) weg blockiert.

40. Buchsenteil nach Anspruch 1, **dadurch gekennzeichnet, dass** eine Vorspanneinrichtung (42) für die Betätigungshülse (3) vorgesehen ist, durch die die Betätigungshülse (3) in eine ihrer Endlagen vorgespannt ist.

## Claims

1. Socket part (1) of a venting coupling for fluid connections with plug connectors (61), which have a circumferential holding groove (63),
with a base body (2), which contains an at least sectionally straight, continuous channel (6), is defined by an outer peripheral face and has a front and a rear end,
with at least one lateral opening (23) in the base body (2), which passes through the base body (2) and opens into the channel (6),
with at least one bush holding body (24), which is located in the lateral opening (23) of the base body (24) and is movable back and forth between a position, in which it projects into the channel (6), and a position, in which it does not project into the channel (6),
with a control member (5) for the bush holding body (24) arranged on the base body (2),
with an intermediate bush (4), which is arranged in the channel (6) and which is restrictedly movable back and forth between two positions and contains a passage (25), into which the plug connector (61) can be inserted from the front,
with at least one holding recess (28), which is provided on the outside of the intermediate bush (4) and is fitted to cooperate with the bush holding body (24),
with at least one lateral opening (32, 33) in the intermediate bush (4), which passes through the intermediate bush (4) and opens into the passage (25),
with at least one connector holding body (34), which is located in the lateral opening (32, 33) of the intermediate bush (4) and serves to cooperate with the holding groove (63) of the plug connector (61) in the sense of holding the plug connector (61) in the intermediate bush (4),
with prestressing elements (42, 43), which are fitted to prestress the connector holding body (34) into its position projecting into the passage (25),
with an operating bush (3), which is arranged on the base body (2) and is restrictedly movable on the base body (2) and which has at least one control surface (47) for the connector holding body (34), which includes a shoulder surface (48), against which the control member (5) arranged in the operating bush (3) elastically abuts under prestress, and
with a valve (7) located in the channel (6) with a valve seat (16) and a valve closing member (53).

2. Socket part according to Claim 1, **characterised in that** the base body (2) is in two parts and comprises a front and a rear section (8, 9).

3. Socket part according to Claim 1, **characterised in that** the front and the rear section (8, 9) of the base body (2) are positively connected to one another, preferably by a thread (11).

4. Socket part according to Claim 1, **characterised in that** the valve seat (16) is configured on a ring (15).

5. Socket part according to Claim 1, **characterised in that** the ring (15) with the valve seat (16) is inserted in axial direction between a shoulder (14) of the front section (8) and a shoulder (12) of the rear section (9) to form a seal.

6. Socket part according to Claim 1, **characterised in that** the front section (8) has an abutment shoulder (13) projecting radially inwards, which cooperates with a radially outward projecting shoulder (27) of the intermediate bush (4) in order to restrict movement of the intermediate bush (4) out of the base body (2).

7. Socket part according to Claim 1, **characterised in that** the base body (2) contains several lateral openings (23) for several bush holding bodies (24), which pass through the base body (2) and open into the channel (6), wherein the openings (23) lie in a common plane, which is at right angles to the longitudinal axis of the channel (6).

8. Socket part according to Claim 1, **characterised in that** the bush holding body (24) is spherical.

9. Socket part according to Claim 1, **characterised in that** on its end located in the base body (2) the intermediate bush (4) is provided with a sealing surface (26), which cooperates with a sealing surface (21) in the base body (2).

10. Socket part according to Claim 9, **characterised in that** the sealing surface (21) of the intermediate bush (4) is formed by a cylinder surface.

11. Socket part according to Claim 10, **characterised in that** the sealing surface (21) in the base body (2) is formed by an O-ring, which is arranged in a groove (19).

12. Socket part according to Claims 8 and 11, **characterised in that** the groove (19) for the seal in the base body (2) is located in the valve seat ring (15).

13. Socket part according to Claim 1, **characterised in that** the intermediate bush (4) has its own associated prestressing means (42), through which the intermediate bush (4) is prestressed into its forward position.

14. Socket part according to Claim 1, **characterised in that** the intermediate bush (4) projects forwards out of the base body (2), and that the lateral opening (32, 33) for the connector holding body (34) is located in the section of the intermediate bush (4) projecting above the base body (2) in all operating positions.

15. Socket part according to Claim 1, **characterised in that** the intermediate bush (4) contains a seal (31) for the plug connector (61).

16. Socket part according to Claim 5, **characterised in that** the seal (31) is formed by an O-ring, which sits in a groove (29) of the intermediate bush (4).

17. Socket part according to Claim 1, **characterised in that** the holding recess (28) is formed on the outside of the intermediate bush (4) by a circumferential annular groove.

18. Socket part according to Claim 1, **characterised in that** the base body (2) is rotationally symmetric, except for the lateral openings (23) contained in the base body (2).

19. Socket part according to Claim 1, **characterised in that** the intermediate bush (4) is disposed to be freely rotatable and restrictedly longitudinally displaceable in the base body (2).

20. Socket part according to Claim 1, **characterised in that** the intermediate bush (4) is rotationally symmetric, except for the lateral opening (32, 33) for the connector holding body (34).

21. Socket part according to Claim 1, **characterised in that** the lateral opening (32, 33) for the connector holding body (34) is formed by a slot defined by two parallel walls (35, 36), which extend at an acute angle to the longitudinal axis of the intermediate bush (4) in such a manner that, at the location where they merge into the outer peripheral surface of the intermediate bush (4), they are more closely adjacent to the rear end of the socket part (1) than the location where the walls (35, 36) open into the passage (25) of the intermediate bush (4).

22. Socket part according to Claim 21, **characterised in that** the slot (32, 33) projects into the passage (25) only a short distance from the side.

23. Socket part according to Claim 1, **characterised in that** the connector holding body (34) is formed by a straight pin, which projects laterally beyond the outer peripheral surface of the intermediate bush (4).

24. Socket part according to Claim 22, **characterised in that** the prestressing means (43) comprise a disc, which cooperates with the ends of the straight pin (34) projecting laterally beyond the intermediate bush (4).

25. Socket part according to Claim 1, **characterised in that** the prestressing means (42) comprise a helical spring, which is indirectly or directly supported on a shoulder surface (48) of the operating bush (3).

26. Socket part according to Claim 1, **characterised in that** the prestressing means (42) for the connector holding body (34) and the prestressing means (42) for the operating bush (4) are formed by a joint helical spring.

27. Socket part according to Claim 1, **characterised in that** the operating bush (3) is rotationally symmetric.

28. Socket part according to Claim 1, **characterised in that** the operating bush (3) comprises a front and a rear section (44, 45).

29. Socket part according to Claim 28, **characterised in that** the front and the rear section (44, 45) are integrally or positively connected to one another, preferably through a screw thread (46).

30. Socket part according to Claim 1, **characterised in that** the control member (5) for the bush holding body (24) is formed by a ring, which sits on the base body (2) and bears control surfaces (38, 39, 41).

31. Socket part according to Claim 30, **characterised in that** the control surfaces (38, 39, 41) for the bush holding body (24) comprise two cylinder surfaces (38, 39) of different diameter, which are connected to one another via a truncated cone-shaped surface (41).

32. Socket according to Claim 1, **characterised in that** the operating bush (3) is prestressed by a prestressing means (42) into any end position, in which it prestresses the bush holding body (24) in a position projecting into the channel (6).

33. Socket part according to Claim 1, **characterised in that** the valve closing member (53) is prestressed by means of a pressure spring (59) into its closed position.

34. Socket part according to Claim 33, **characterised in that** the pressure spring (59) is located outside the flow path of a fluid flowing through the channel (6) of the socket part (1).

35. Socket part according to Claim 34, **characterised in that** the pressure spring (59) is located on the side of the valve seat (16), which is adjacent to the plugged-in plug connector (61).

36. Socket part according to Claim 1, **characterised in that** the intermediate bush (4) is not sealed against the base body (2).

37. Socket part according to Claim 1, **characterised in that** a sealing arrangement (71) is provided between the intermediate bush (4) and the valve closing member (53).

38. Socket part according to Claim 1, **characterised in that** a sealing arrangement (73) is provided between the valve closing member (53) and the base body (2) and is arranged so that it seals the inside wall of the channel (6) to the outside when the valve (7) is open.

39. Socket part according to Claim 1, **characterised in that** the operating bush (3) has an associated abutment (51, 52), which with a gastight fluid connection blocks a movement of the operating bush (3) in the sense of the connector holding body (34) moving away from the plug connector (61), when the plug connector (61) is fully plugged in.

40. Socket part according to Claim 1, **characterised in that** a prestressing means (42) is provided for the operating bush (3), through which the operating bush (3) is prestressed into one of its end positions.

## Revendications

1. Partie à douille (1) d'un accouplement de dégazage pour des liaisons de fluide à des connecteurs (61) présentant une rainure périphérique de maintien (63), comportant :
- un corps de base (2) contenant un canal traversant (6) qui est au moins en partie rectiligne et délimité par une surface cylindrique externe, et comportant une extrémité avant et une extrémité arrière,
- au moins une ouverture latérale (23) dans le corps de base (2), traversant celui-ci et débouchant dans le canal (6),
- au moins un corps de maintien de douille (24) qui se trouve dans l'ouverture latérale (23) du corps de base (2) et qui peut se déplacer de manière limitée en va-et-vient entre une position dans laquelle il fait saillie dans le canal (6) et une position dans laquelle il ne fait pas saillie dans ce canal,
- au moins, dans le corps de base, un organe de commande (5) pour le corps de maintien de douille (24),
- une douille intermédiaire (4) montée dans le canal (6), qui peut se déplacer en va-et-vient entre deux positions et qui présente un passage (25) dans lequel le connecteur (61) peut être introduit de l'avant,
- au moins un évidement de maintien (28) prévu sur la surface externe de la douille intermédiaire (4) et conçu de manière à coopérer avec le corps de maintien de douille (24),
- au moins une ouverture latérale (32, 33) dans la douille intermédiaire (4), traversant celle-ci et débouchant dans le passage (25),
- au moins un corps de maintien de connecteur (34) qui se trouve dans l'ouverture latérale (32, 33) de la douille intermédiaire (4) et sert à coopérer avec la douille de maintien (63) du connecteur (61), afin de maintenir celui-ci dans la douille intermédiaire (4),
- des moyens de précontrainte (42, 43) conçus pour précontraindre le corps de maintien de connecteur (34) en direction de sa position en saillie dans le passage (25),
- une douille d'actionnement (3) montée sur le corps de base (2) avec mobilité limitée sur celui-ci, et qui comprend au moins pour le corps de maintien de connecteur (34) une portée de commande (47) comportant une surface d'épaulement (48) sur laquelle est appliqué avec précontrainte élastique l'organe de commande (5) monté dans la douille d'actionnement (3),
- une soupape (7) disposée dans le canal (6) et comportant un siège de soupape (16) et un organe de fermeture de soupape (53).

2. Partie à douille selon la revendication 1, **caractérisée en ce que** le corps de base (2) est en deux parties, à savoir une partie avant (8) et une partie arrière (9).

3. Partie à douille selon la revendication 1, **caractérisée en ce que** les parties avant et arrière (8, 9) du corps de base (2) sont reliées entre elles avec verrouillage par combinaison de formes, de préférence par un filetage (11).

4. Partie à douille selon la revendication 1, **caractérisée en ce que** le siège de soupape (16) est réalisé sur une bague (15).

5. Partie à douille selon la revendication 1, **caractérisée en ce que** la bague (15) avec le siège de soupape (16) est insérée en direction axiale et avec étanchéité entre l'épaulement (14) de la partie avant (8) et un épaulement (12) de la partie arrière (9).

6. Partie à douille selon la revendication 1, **caractérisée en ce que** la partie avant (8) présente un épaulement de butée (13) faisant saillie radialement vers l'intérieur et qui coopère avec un épaulement (27), faisant saillie radialement vers l'extérieur, de la douille intermédiaire (4) afin de limiter le mouvement de la douille intermédiaire l'écartant du corps de base (2).

7. Partie à douille selon la revendication 1, **caractérisée en ce que** le corps de base (2) présente pour plusieurs corps de maintien de douille (24) plusieurs ouvertures latérales (23) qui traversent le corps de base (2) et débouchent dans le canal (6), ces ouvertures se trouvant dans un plan commun perpendiculaire à l'axe longitudinal du canal (6).

8. Partie à douille selon la revendication 1, **caractérisée en ce que** le corps de maintien de douille (24) est de forme conique.

9. Partie à douille selon la revendication 1, **caractérisée en ce que** la douille intermédiaire (4) présente à son extrémité située dans le corps de base (2) une portée d'étanchéité (26) qui coopère avec une portée d'étanchéité (21) dans le corps de base (2).

10. Partie à douille selon la revendication 9, **caractérisée en ce que** la portée d'étanchéité (21) de la douille intermédiaire (4) est une surface cylindrique.

11. Partie à douille selon la revendication 10, **caractérisée en ce que** la portée d'étanchéité (20) dans le corps de base (2) est constituée par une bague O-Ring montée dans une rainure (19).

12. Partie à douille selon les revendications 8 et 11, **caractérisée en ce que** la rainure (19) assurant l'étanchéité dans le corps de base (2) se trouve dans la bague de siège de soupape (15).

13. Partie à douille selon la revendication 1, **caractérisée en ce qu'**à la douille intermédiaire (4) est associé un dispositif de précontrainte (42) propre qui précontraint la douille dans la direction de sa position avant.

14. Partie à douille selon la revendication 1, **caractérisée en ce que** la douille intermédiaire fait saillie vers l'avant sur le corps de base (2) et l'ouverture latérale (32, 33) pour le corps de maintien de connecteur (34), se trouve dans la section de la douille intermédiaire (4) qui fait saillie sur le corps de base (2) dans toutes les positions de fonctionnement.

15. Partie à douille selon la revendication 1, **caractérisée en ce que** la douille intermédiaire (4) contient un joint d'étanchéité (31) pour le connecteur (61).

16. Partie à douille selon la revendication 5, **caractérisée en ce que** le joint d'étanchéité (31) est constitué par une bague O-Ring montée dans une rainure (29) de la douille intermédiaire (4).

17. Partie à douille selon la revendication 1, **caractérisée en ce que** l'évidement de maintien (28) est réalisé dans la surface externe de la douille intermédiaire sous la forme d'une rainure annulaire périphérique.

18. Partie à douille selon la revendication 1, **caractérisée en ce que** le corps de base (2), abstraction faite des ouvertures latérales (23) qu'il comporte, est un corps de révolution.

19. Partie à douille selon la revendication 1, **caractérisée en ce que** la douille intermédiaire (4) peut tourner librement et coulisser longitudinalement de manière limitée, dans le corps de base (2).

20. Partie à douille selon la revendication 1, **caractérisée en ce que** la douille intermédiaire (4), abstraction faite des ouvertures latérales (32, 33) pour les corps de maintien des connecteurs (34), est un corps de révolution.

21. Partie à douille selon la revendication 1, **caractérisée en ce que** l'ouverture latérale (32, 33) pour le corps de maintien de connecteur (34) est constituée par une fente délimitée par deux parois parallèles (35, 36) inclinées selon un angle aigu par rapport à l'axe longitudinal de la douille intermédiaire (4), de manière que l'endroit où ces parois se poursuivent dans la surface périphérique externe de la douille intermédiaire (4), est plus proche de l'extrémité arrière de la partie à douille (1) que l'endroit où ces parois (35, 36) débouchent dans le passage (25) de la douille intermédiaire (4).

22. Partie à douille selon la revendication 21, **caractérisée en ce que** la fente (32, 33) pénètre dans le passage (25) en étant seulement un peu décalée latéralement.

23. Partie à douille selon la revendication 1, **caractérisée en ce que** le corps de maintien de connecteur (34) est constitué par une broche cylindrique qui fait saillie latéralement sur la surface périphérique externe de la douille intermédiaire (4).

24. Partie à douille selon la revendication 22, **caractérisée en ce que** les moyens de précontrainte (43) comprennent un disque qui coopère avec les extrémités de la broche cylindrique (34) qui dépassent latéralement la douille intermédiaire (4).

25. Partie à douille selon la revendication 1, **caractérisée en ce que** les moyens de précontrainte (42) comprennent un ressort hélicoïdal s'appuyant directement ou indirectement sur une portée d'épaulement (48) de la douille d'actionnement (3).

26. Partie à douille selon la revendication 1, **caractérisée en ce que** les moyens de précontrainte (42) pour les corps de maintien de connecteur (34) et le dispositif de précontrainte (42) pour la douille d'actionnement (3) sont constitués par un ressort hélicoïdal commun.

27. Partie à douille selon la revendication 1, **caractérisée en ce que** la douille d'actionnement (3) est un corps de révolution.

28. Partie à douille selon la revendication 1, **caractérisée en ce que** la douille d'actionnement (3) est composée d'une section avant (44) et d'une section arrière (45).

29. Partie à douille selon la revendication 28, **caractérisée en ce que** les sections avant et arrière (44, 45) sont reliées entre elles par la matière ou avec verrouillage par combinaison de formes, de préférence par un filetage hélicoïdal (46).

30. Partie à douille selon la revendication 1, **caractérisée en ce que** l'organe de commande (5), pour le corps de maintien de douille (24), est constitué par une bague montée sur le corps de base (2) et qui présente des portées de commande (38, 39,41).

31. Partie à douille selon la revendication 30, **caractérisée en ce que** les portées de commande (38, 39, 41) pour le corps de maintien de douille (24), sont composées de deux portées cylindriques (38, 39) de diamètres différents, reliées par une portée (41) en forme de tronc de cône.

32. Partie à douille selon la revendication 1, **caractérisée en ce que** la douille d'actionnement (3) est précontrainte par un dispositif de précontrainte (42) en direction de la position de fin de course dans laquelle elle précontraint le corps de maintien de douille (24) dans une position faisant saillie dans le canal (6).

33. Partie à douille selon la revendication 1, **caractérisée en ce que** l'organe de fermeture de soupape (53) est précontraint en direction de sa position de fermeture par l'intermédiaire d'un ressort de poussée (59).

34. Partie à douille selon la revendication 33, **caractérisée en ce que** le ressort de poussée (59) se trouve à l'extérieur du parcours d'un fluide s'écoulant à travers le canal (6) de la partie à douille (1).

35. Partie à douille selon la revendication 34, **caractérisée en ce que** le ressort de poussée (59) se trouve sur le côté du siège de soupape (16) qui est proche du connecteur (61) enfiché.

36. Partie à douille selon la revendication 1, **caractérisée en ce que** la douille intermédiaire (4) n'est pas rendue étanche par rapport au corps de base (2).

37. Partie à douille selon la revendication 1, **caractérisée en ce qu'**entre la douille intermédiaire (4) et l'organe de fermeture de soupape (53) est prévu un dispositif d'étanchéité (51).

38. Partie à douille selon la revendication 1, **caractérisée en ce qu'**entre l'organe de fermeture de soupape (53) et le corps de base (2) est prévu un dispositif d'étanchéité (73) conçu de manière à rendre étanche le volume interne du canal (6) par rapport à l'extérieur, quand la soupape (7) est ouverte.

39. Partie à douille selon la revendication 1, **caractérisée en ce qu'**à la douille d'actionnement (3) est associée une butée (51, 52) qui, quand le connecteur (61) est totalement enfiché avec une liaison de fluide étanche aux gaz, bloque un déplacement de la douille d'actionnement (3) dans le sens qui éloigne du connecteur (61) le corps de maintien de connecteur (34).

40. Partie à douille selon la revendication 1, **caractérisée en ce qu'**il est prévu pour la douille d'actionnement (3) un dispositif de précontrainte par lequel cette douille est précontrainte en direction d'une de ses positions de fin de course.
